(19) Europäisches Patentamt
European Patent Office
Office européen des brevets

(11) EP 2 961 056 A1

(12) **EUROPEAN PATENT APPLICATION**
published in accordance with Art. 153(4) EPC

(43) Date of publication:
**30.12.2015 Bulletin 2015/53**

(51) Int Cl.:
**H02M 7/48** (2007.01)

(21) Application number: **13875426.2**

(86) International application number:
**PCT/JP2013/054591**

(22) Date of filing: **22.02.2013**

(87) International publication number:
**WO 2014/128935 (28.08.2014 Gazette 2014/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fuji Machine Mfg. Co., Ltd.**
**Chiryu-shi**
**Aichi 472-8686 (JP)**

(72) Inventors:
• **TAKIKAWA Shinji**
  **Chiryu-shi**
  **Aichi 472-8686 (JP)**
• **NOMURA Takeshi**
  **Chiryu-shi**
  **Aichi 472-8686 (JP)**

(74) Representative: **Grünecker Patent- und**
**Rechtsanwälte**
**PartG mbB**
**Leopoldstraße 4**
**80802 München (DE)**

(54) **ALTERNATING CURRENT POWER SOURCE DEVICE**

(57) An AC power supply device of the invention includes: a DC power supply unit that outputs a DC voltage; an inverter unit that includes at least four bridge-connected switching elements, a pair of input terminals connected to the DC power supply unit, and an output terminal group connected to an external load, and that converts the DC voltage, which is input to the pair of input terminals from the DC power supply unit, into a single-phase or three-phase AC voltage, and outputs the single-phase or three-phase AC voltage to the external load from the output terminal group; a switching control unit that controls the opening/closing of the switching elements; and an efficiency improvement coil that is connected between terminals of the output terminal group and is connected in parallel to the external load. Accordingly, it is possible to reduce a switching loss, which is generated when a switching operation is performed, by a simple circuit configuration and to achieve the reduction of the size and weight of the device by the simplification of radiation fins and the like.

[FIG. 1]

**Description**

Technical Field

The present invention relates to an AC power supply device that converts a DC voltage into an AC voltage by a switching operation using a switching element and outputs the converted AC voltage.

Background Art

A non-contact power feed device is used to supply power to a moving body in a non-contact manner or to charge a portable electrical device in a non-contact manner. In the past, an inductive coupling system using coils has been widely used as a system of a non-contact power feed device. However, an electrostatic-coupling system in which a capacitor is formed by electrodes facing each other so as to be spaced apart from each other also has been used in recent years. In addition, a magnetic field resonance system and the like also have been examined. In the non-contact power feed device, power is generally supplied by an AC voltage having a high frequency higher than a general commercial frequency. Particularly, since the impedance of the capacitor is inversely proportional to the frequency in the electrostatic-coupling system, it is preferable to reduce the impedance by increasing the frequency that is used to supply power in a non-contact manner.

Meanwhile, an AC power supply device which generates a high-frequency AC voltage usually includes a DC power supply unit and an inverter unit that includes bridge-connected switching element. The switching loss of a switching element increases substantially in proportion to the frequency, and loss to the outside through leakage also increases as the frequency increases. Accordingly, it is preferable to reduce loss by reducing the frequency that is used to supply power in a non-contact manner. In consideration of these two contrary frequency conditions, a high frequency AC voltage from 100 kHz to an order of MHz is used in electrostatic-coupling non-contact power feed devices. Further, an AC power supply device is provided with radiation fins and the like as necessary in order to reduce the temperature rise that is caused by switching loss. One technical example of this kind of high-frequency AC power supply device is disclosed in PTL 1.

The high-frequency power supply device disclosed in PTL 1 is a power supply device that uses a high-frequency inverter performing the on/off control of a DC voltage by a switching element, and includes an intermediate electric potential generating circuit that divides a DC voltage, and the same number of inductors as the number of output terminals. The inductors are connected between the output terminals and an intermediate electric potential. PTL 1 discloses as follows. In this device, a bias current always flows in a coil, an output current can be delayed relative to an output voltage in phase, and a soft switching function can always be maintained. Accordingly, it is possible to greatly contribute to the reduction of the size and loss of the device.

Citation List

Patent Literature

PTL 1: JP-A-2004-64907

Summary of Invention

Technical Problem

PTL 1 discloses that a switching loss can be made zero by soft switching when the output current is delayed relative to an output voltage in phase. However, a switching loss is not made zero in an actual circuit. Since a switching operation time of a certain degree is required in an actual switching operation, a switching loss depending on the internal resistance of the switching element, a voltage to be applied, and a current to flow during the switching operation time is generated. Accordingly, it cannot be said that the technique of PTL 1 is necessarily an effective means for reducing the size and loss of the device.

The invention has been made in consideration of problems of the background art, and an object of the invention is to provide an AC power supply device that reduces a switching loss, which is generated when a switching operation is performed, by a simple circuit configuration and achieves a reduction of the size and weight of the device by the simplification of radiation fins and the like.

Solution to Problem

In order to achieve the above-mentioned object, according to claim 1, there is provided an AC power supply device including: a DC power supply unit that outputs a DC voltage; an inverter unit that includes at least four bridge-connected switching elements, a pair of input terminals connected to the DC power supply unit, and an output terminal group connected to an external load, and that converts the DC voltage, which is input to the pair of input terminals from the DC power supply unit, into a single-phase or three-phase AC voltage, and outputs the single-phase or three-phase AC voltage to the external load from the output terminal group; a switching control unit that controls the opening/closing of the switching elements; and an efficiency improvement coil that is connected between terminals of the output terminal group and is connected in parallel to the external load.

Advantageous Effects of Invention

In the invention of the AC power supply device according to claim 1, the efficiency improvement coil is connected in parallel to the external load, a coil current delayed in phase overlaps a load current and forms a total current, and the switching elements of the inverter unit open/close the total current. Here, since the coil current has a negative value during a conduction operation in which the switching elements are changed to a conduction state from a cutoff state, the total current decreases. Accordingly, a switching loss per conduction operation significantly decreases. Meanwhile, the total current may increase during a cutoff operation in which the switching elements are changed to a cutoff state from a conduction state. However, since a cutoff operation time is generally shorter than a conduction operation time, a switching loss per cutoff operation does not significantly increase. Accordingly, it is possible to reduce a switching loss per unit time, which is generated when the conduction operation and the cutoff operation are repeated, by a simple circuit configuration to which the efficiency improvement coil not provided in the circuit in the related art is merely added. Further, since the amount of heat generated from the switching elements decreases, radiation fins and the like can be simplified. As a result, it is possible to reduce the size and weight of the device.

Brief Description of Drawings

[Fig. 1] Fig. 1 is a diagram showing the configuration of an AC power supply device according to a first embodiment of the invention.
[Fig. 2] Fig. 2 is a circuit diagram schematically showing the circuit configuration corresponding to one switching element of a switching control unit.
[Fig. 3] Fig. 3 shows temporal waveforms illustrating the outline of an operation of the AC power supply device according to the first embodiment.
[Fig. 4] Fig. 4 shows temporal waveforms schematically illustrating a conduction operation of a switching element of the AC power supply device according to the first embodiment.
[Fig. 5] Fig. 5 shows temporal waveforms schematically illustrating a conduction operation of a switching element of a circuit in the related art.
[Fig. 6] Fig. 6 shows temporal waveforms schematically illustrating a cutoff operation of the switching element of the AC power supply device according to the first embodiment.
[Fig. 7] Fig. 7 shows temporal waveforms schematically illustrating a cutoff operation of a switching element of a circuit in the related art.
[Fig. 8] Fig. 8 is a diagram showing the configuration of an AC power supply device according to a second embodiment and a non-contact power feed device as an external load.

Description of Embodiments

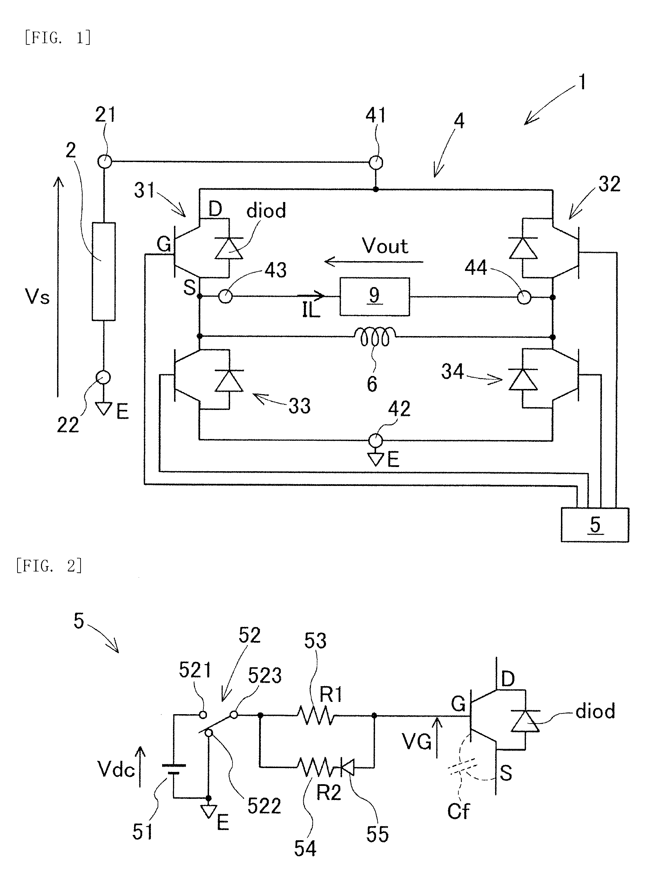

A first embodiment of the invention will be described with reference to Figs. 1 to 7. Fig. 1 is a diagram showing the configuration of an AC power supply device 1 according to the first embodiment of the invention. The AC power supply device 1 is a device that outputs a single-phase AC voltage to an external load 9. The AC power supply device 1 includes a DC power supply unit 2, an inverter unit 4, a switching control unit 5, an efficiency improvement coil 6, and the like. Conventional techniques can be appropriately applied to components other than the efficiency improvement coil 6, that is, components 2 to 5.
The DC power supply unit 2 outputs a DC voltage of a power supply voltage Vs from a positive terminal 21 and a negative terminal 22. The positive terminal 21 is connected to an input terminal 41 of the inverter unit 4. The negative terminal 22 is grounded to an earth E that is common to the device 1. For example, a rectifier circuit that rectifies a commercial-frequency AC voltage and outputs a DC voltage, a battery, or the like can be used as the DC power supply unit 2.

The inverter unit 4 includes an input terminal 41 connected to the positive terminal 21 of the DC power supply unit 2 and a ground terminal 42 electrically connected to the earth E, as a pair of input terminals. The inverter unit 4 includes first and second output terminals 43 and 44 as a pair of output terminals. The external load 9 is connected between the first and second output terminals 43 and 44. The inverter unit 4 is formed by the bridge connection of four switching elements 31 to 34. Three-terminal field effect transistors (FET) are used as the switching elements 31 to 34 in this embodiment, and other types of semiconductor elements may be used.

Bridge connection will be described in detail. The first switching element 31 and the third switching element 33 are connected in series between the input terminal 41 and the ground terminal 42 of the inverter unit 4. A drain terminal D of the first switching element 31 is connected to the input terminal 41. A source terminal S of the first switching element 31 is connected to a drain terminal D of the third switching element 33 and the first output terminal 43. A source terminal S of the third switching element 33 is connected to the ground terminal 42. Meanwhile, in Fig. 1, reference characters of the terminals of the first switching element 31 are shown and reference characters of terminals of the second to fourth switching elements 32 to 34 are not shown.

Likewise, the second switching element 32 and the fourth switching element 34 are connected in series between the input terminal V41 and the ground terminal 42 of the inverter unit 4. A drain terminal D of the second switching element 32 is connected to the input terminal V41. A source terminal S of the second switching element 32 is connected to a drain terminal D of the fourth switching element 34 and the second output terminal 44. A source terminal S of the fourth switching element 34 is connected to the ground terminal 42.

Each of the switching elements 31 to 34 is provided with a diode diod that allows a current to flow to the drain terminal D from the source terminal S and prevents a current from flowing to the source terminal S from the drain terminal D. A gate terminal G of each of the switching elements 31 to 34 is connected to the switching control unit 5. The opening/closing of each of the switching elements 31 to 34 is controlled by a gate control signal input to the gate terminal G, that is, a gate voltage VG (a voltage relative to the source terminal S of the gate terminal G). When the gate voltage VG reaches a predetermined high level or more, each of the switching elements 31 to 34 is in a conduction state in which the internal resistance between the drain terminal D and the source terminal S is substantially zero. Further, when the gate voltage VG reaches a predetermined low level or less, each of the switching elements 31 to 34 is in a cutoff state in which the internal resistance is substantially infinite. Furthermore, when the gate voltage VG transiently reaches an intermediate level between the high level and the low level, the internal resistance of each of the switching elements 31 to 34 is changed to a finite value.

The above-mentioned predetermined high level corresponds to a first level of the invention and the predetermined low level corresponds to a second level of the invention. The levels are not limited thereto, and the first level may be lower than the second level. That is, a semiconductor element which is in a cutoff state when the gate control signal is high and is in a conduction state when the gate control signal is low may be used.

In the inverter unit 4, at a certain time, the first and fourth switching elements 31 and 34 are controlled into a conduction state in synchronization with each other and the second and third switching elements 32 and 33 are controlled into a cutoff state at the same time. Further, at a subsequent time, the first and fourth switching elements 31 and 34 are controlled into a cutoff state in synchronization with each other and the second and third switching elements 32 and 33 are controlled into a conduction state at the same time. Accordingly, an AC output voltage Vout having the form of a rectangular wave is generated between the first and second output terminals 43 and 44. Furthermore, a load current IL also flows in the external load 9 as an alternating current.

The switching control unit 5 includes four circuits having the same configuration, and can independently control the opening/closing of the respective switching elements 31 to 34. The switching control unit 5 is not limited thereto, and may include a total of two circuits, that is, a circuit common to the first and fourth switching elements 31 and 34 and a circuit common to the second and third switching elements 32 and 33. Fig. 2 is a circuit diagram schematically showing the circuit configuration corresponding to one switching element of the switching control unit 5. As shown in Fig. 2, one circuit of the switching control unit 5 is provided between the gate terminal G of each of the switching elements 31 to 34 and the earth E, and includes a control power supply 51, a control switch 52, a charging/discharging resistor 53, a discharging resistor 54, and a diode 55.

The control power supply 51 is a DC power supply that outputs a DC voltage Vdc higher than the above-mentioned high level. The control power supply 51 may be formed by the appropriate division of the power supply voltage Vs of the DC power supply unit 2, and may be provided separately from the DC power supply unit 2. A negative terminal of the control power supply 51 is electrically connected to the earth E, and a positive terminal thereof is connected to a charging terminal 521 of the control switch 52. The control switch 52 is a switch that switches and controls the level of the gate voltage VG, and includes the charging terminal 521, a discharging terminal 522 electrically connected to the earth E, and a common terminal 523. The control switch 52 selectively connects the common terminal 523 to any one of the charging terminal 521 and the discharging terminal 522.

It is preferable that the control switch 52 is a contactless switch to be switched according to electronic control from an electronic control unit (not shown), but the control switch 52 is not limited to the contactless switch. Further, the control power supply 51 and the control switch 52 may be adapted to be included in the electronic control unit.

The charging/discharging resistor 53 has a resistance value R1, and is connected between the common terminal 523 of the control switch 52 and the gate terminal G of each of the switching elements 31 to 34. A series circuit, which is formed of the discharging resistor 54 having a resistance value R2 and the diode 55, is connected in parallel to the charging/discharging resistor 53. The diode 55 allows a current to flow to the common terminal 523 from the gate terminal G through the discharging resistor 54, and prevents a current from flowing to the gate terminal G from the common terminal 523.

Since the gate terminal G is electrically connected to the earth E through the charging/discharging resistor 53 and the discharging resistor 54 when the common terminal 523 of the control switch 52 is connected to the discharging terminal 522 as shown in Fig. 2, the gate voltage VG has a low level. Here, since the DC voltage Vdc of the control power supply 51 is applied to the gate terminal G through the charging/discharging resistor 53 when the control switch 52 is controlled so as to be switched to the charging terminal 521, the gate voltage VG rises. An electric charge time constant $\tau1$ at this time can be obtained using the following (Equation 1) that is expressed by stray capacity Cf between the gate terminal G and the source terminal S of each of the switching elements 31 to 34 and the resistance value R1 of the charging/discharging resistor 53.

$$\texttt{Electric charge time constant } \tau1 = R1*Cf$$

Accordingly, the gate voltage VG gently increases with the electric charge time constant $\tau1$, and reaches a high level at a point in time when a certain rise time has elapsed.

Meanwhile, when the control switch 52 is switched to the discharging terminal 522 after the gate voltage VG substantially rises up to the DC voltage Vdc, the gate voltage VG falls. An electric discharge time constant $\tau2$ at this time is roughly determined in a parallel circuit that has the resistance value R1 of the charging/discharging resistor 53 and the resistance value R2 of the discharging resistor 54, and is very small. Accordingly, the gate voltage VG rapidly decreases in a very short fall time and reaches a low level almost instantly.

Returning to Fig. 1, the efficiency improvement coil 6 is connected between the first and second output terminals 43 and 44. The efficiency improvement coil 6 is connected in parallel to the external load 9. The inductance value of the efficiency improvement coil 6 is not limited, but it is preferable that the inductance value of the efficiency improvement coil 6 is appropriately designed in consideration of the external load 9 to be assumed. The efficiency improvement coil 6 is not provided in the circuit in the related art and is an essential component of the invention.

Further, the AC power supply device 1 is provided with an appropriate number of radiation fins (not shown) in order to suppress a temperature rise by dissipating losses (heat) generated in the respective switching elements 31 to 34 of the inverter unit 4, other circuit elements, the DC power supply unit 2, and the like.

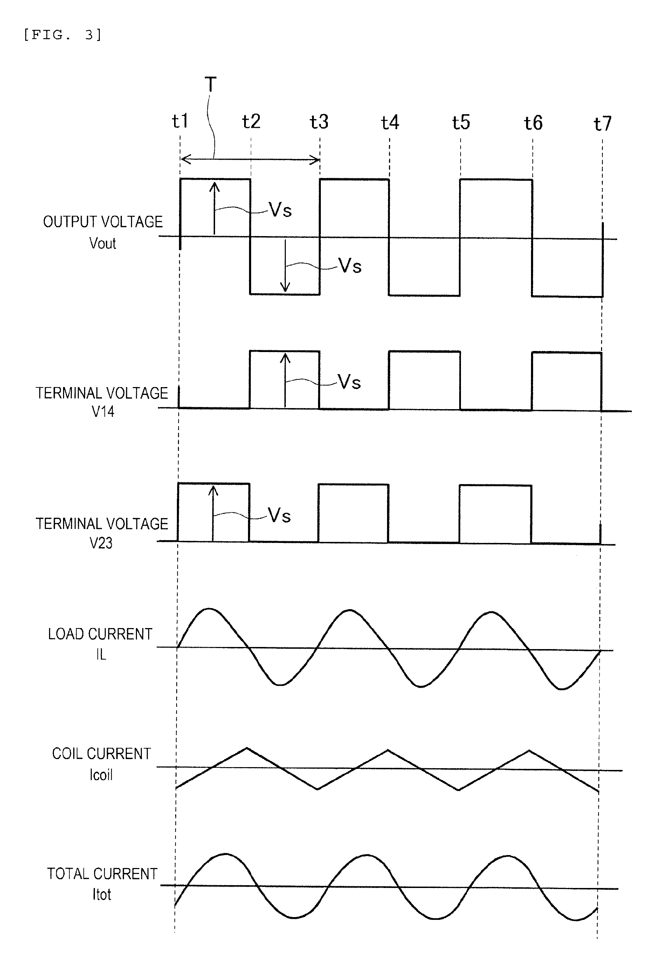

Next, the operation and action of the AC power supply device 1 according to the first embodiment having the above-mentioned configuration will be described while being compared with those of the circuit in the related art. Fig. 3 shows temporal waveforms illustrating the outline of the operation of the AC power supply device 1 according to the first embodiment. In Fig. 3, the first waveform from the top corresponds to the output voltage Vout that shows the electric potential of the first output terminal 43 relative to the electric potential of the second output terminal 44, and the second waveform from the top corresponds to a terminal voltage V14 that shows the electric potential of the drain terminal D of each of the first and fourth switching elements 31 and 34 relative to the electric potential of the source terminal S thereof. The third waveform corresponds to a terminal voltage V23 that shows the electric potential of the drain terminal D of each of the second and third switching elements 32 and 33 relative to the electric potential of the source terminal S thereof. The fourth waveform corresponds to the load current IL flowing in the external load 9, wherein a direction in which a current flows to the second output terminal 44 from the first output terminal 43 is referred to as positive and a direction opposite to that is referred to as negative. The fifth waveform corresponds to a coil current Icoil flowing in the efficiency improvement coil 6, wherein a direction in which a current flows to the second output terminal 44 from the first output terminal 43 is referred to as positive and a direction opposite to that is referred to as negative. The sixth waveform corresponds to a total current Itot that is obtained by vectorially adding the load current IL to the coil current Icoil.

Here, for simple description, the load current IL flowing in the external load 9 is assumed as a sine wave having the same phase as the output voltage Vout. Further, since the output voltage Vout is a rectangular wave, the coil current Icoil becomes a triangular wave that is delayed in phase. In the circuit in the related art that is not provided with the efficiency improvement coil 6, the first to fourth waveforms from the top are the same as those in the embodiment and the two lower waveforms are not generated.

At a time t1 of Fig. 3, the switching control unit 5 controls the first and fourth switching elements 31 and 34 into the conduction state while synchronizing the first switching element 31 with the fourth switching element 34, and, simultaneously, controls the second and third switching elements 32 and 33 into the cutoff state. Accordingly, the output voltage Vout is substantially the same as the power supply voltage Vs of the DC power supply unit 2. The terminal voltage V14 becomes substantially zero, and the terminal voltage V23 is substantially the same as the power supply voltage Vs. Further, the load current IL, which has the same phase as the output voltage Vout, increases across a zero point at the time t1. Furthermore, the coil current Icoil is changed to increase from the minimum value (the maximum negative value) at the time t1, and increases with a constant inclination after the time t1. Since the total current Itot is delayed in phase due to the influence of the coil current Icoil, the total current Itot has a negative value at the time t1.

At a time t2 of Fig. 3, the switching control unit 5 controls the first and fourth switching elements 31 and 34 into the cutoff state while synchronizing the first switching element 31 with the fourth switching element 34, and, simultaneously, controls the second and third switching elements 32 and 33 into the conduction state. Accordingly, the output voltage Vout is alternated and becomes a negative voltage that has substantially the same absolute value as the power supply voltage Vs. The terminal voltage V14 is substantially the same as the power supply voltage Vs, and the terminal voltage V23 becomes substantially zero. Further, the load current IL is changed into the form of a half wave of a sine wave between the time t1 and the time t2, and decreases across the zero point at the time t2. Furthermore, the coil current Icoil is changed to decrease from the maximum value at the time t2, and decreases with a constant inclination after the time t2. Since the total current Itot is delayed in phase due to the influence of the coil current Icoil, the total current Itot has a positive value at the time t2.

The above-mentioned switching operations at the times t1 and t2 are repeated at times t3 to t7 having regular time intervals after the time t2. Accordingly, an AC output voltage Vout is applied to the external load 9, so that an alternating load current IL flows in the external load 9. Further, the frequency of the alternating current is determined depending on a repetition cycle T of the switching operations.

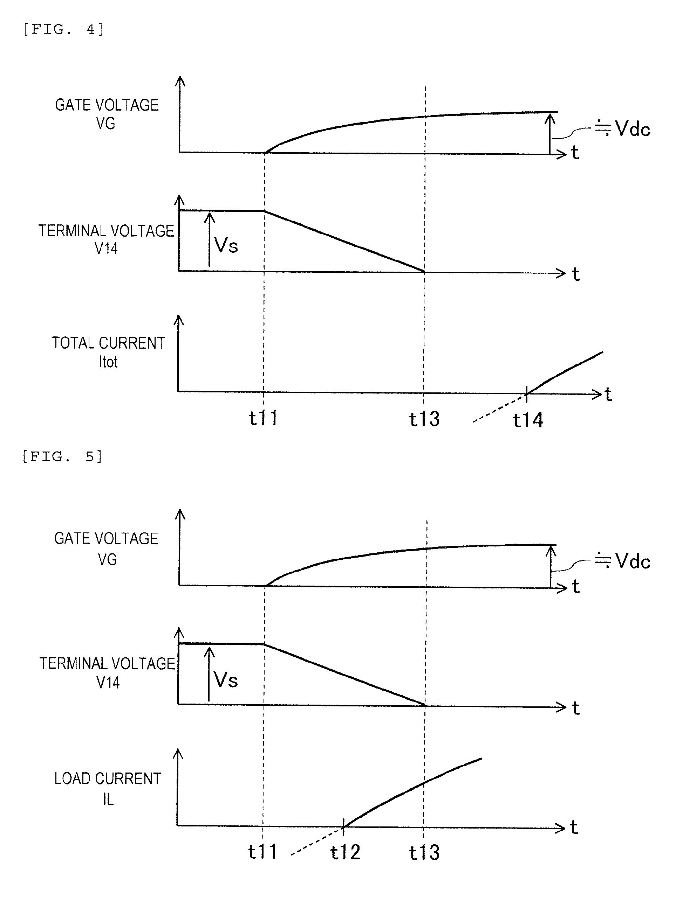

Next, a switching loss, which is generated in the switching operation, will be described. Fig. 4 shows temporal waveforms schematically illustrating a conduction operation of the switching element 31 of the AC power supply device 1 according to the first embodiment. Fig. 4 illustrates the conduction operations of the first switching element 31 at the times t1, t3, t5, and t7, and the scale of a horizontal axis of Fig. 4 is larger than that of Fig. 3. In Fig. 4, the upper waveform corresponds to the gate voltage VG, the intermediate waveform corresponds to the terminal voltage V14, and the lower waveform corresponds to the total current Itot.

In Fig. 4, the gate voltage VG starts to gently increase from zero with the time constant $\tau1$ when the control of the conduction operation to the conduction state from the cutoff state is started at a time t11. At this time, the internal resistance between the drain terminal D and the source terminal S starts to decrease from infinity and the terminal voltage V14 also starts to decrease. When the gate voltage VG reaches a predetermined high level at a time t13 in which a rise time has elapsed, the internal resistance becomes zero at this point in time, the terminal voltage V14 is eliminated, and the conduction operation ends. The total current Itot, which is delayed in phase, starts to flow at a time t14 thereafter, but a switching loss is not generated since the internal resistance has already become zero.

In contrast, Fig. 5 shows temporal waveforms schematically illustrating a conduction operation of a switching element of the circuit in the related art. In Fig. 5, the waveforms of a gate voltage VG and a terminal voltage V14 are the same as those of the embodiment but the waveform of a total current Itot is replaced with the waveform of a load current IL. In the circuit in the related art, the load current IL starts to flow at a time t12 in which the gate voltage VG has not yet reached a high level. Since the internal resistance is not zero at this point of time, a switching loss is generated. The switching loss per conduction operation is a value that is obtained by integrating the product of the terminal voltage V14 and the load current IL from the time t12 to a time t13.

Meanwhile, some switching losses may be generated even in the embodiment, depending on the magnitude and type of the external load 9. For example, when the phase of the load current IL advances ahead of the phase of the output voltage Vout, the load current IL overlapping the conduction operation increases. Moreover, naturally, there may also be cases in which the load current IL is not a sine wave. However, since the coil current Icoil flowing in the efficiency improvement coil 6 functions to delay the phase of the total current Itot, the magnitude of the total current Itot overlapping the conduction operation can be reduced even in these cases. Accordingly, according to this embodiment, a switching loss per conduction operation significantly decreases.

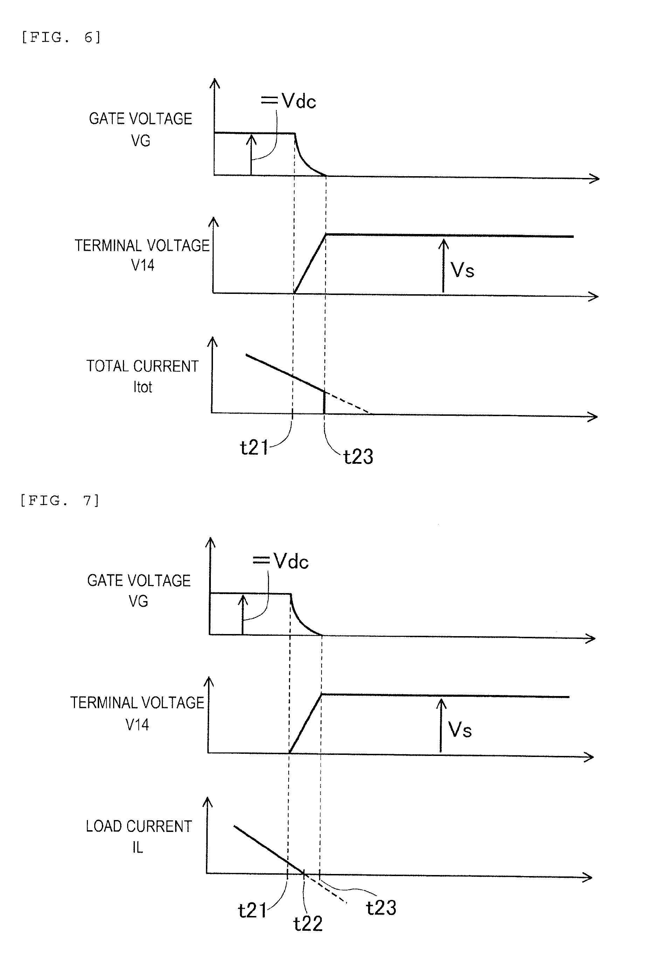

Next, Fig. 6 shows temporal waveforms schematically illustrating the cutoff operation of the switching element 31 of the AC power supply device 1 according to the first embodiment. Fig. 6 illustrates the cutoff operations of the first switching element 31 at the times t2, t4, and t6, and the scale of a horizontal axis of Fig. 6 is larger than that of Fig. 3. In Fig. 6, the upper waveform corresponds to the gate voltage VG, the intermediate waveform corresponds to the terminal voltage V14, and the lower waveform corresponds to the total current Itot.

In Fig. 6, the gate voltage VG starts to rapidly decrease from the DC voltage Vdc of the control power supply 51 when the control of the cutoff operation to the cutoff state from the conduction state is started at a time t21. At this time, the internal resistance between the drain terminal D and the source terminal S starts to increase from zero and the terminal voltage V14 also starts to increase. When the gate voltage VG reaches a predetermined low level at a time t23 at which a very short fall time has elapsed, the internal resistance becomes infinite at this point of time, the terminal voltage V14 is substantially the same as the power supply voltage Vs of the DC power supply unit, and the cutoff operation ends. A very short time between the time t21 and the time t23 is a cutoff operation time. During this cutoff operation time, a switching loss is generated by the total current Itot.

In contrast, Fig. 7 shows temporal waveforms schematically illustrating a cutoff operation of the switching element of the circuit in the related art. In Fig. 7, the waveforms of a gate voltage VG and a terminal voltage V14 are the same as those of the embodiment but the waveform of a total current Itot is replaced with the waveform of a load current I. That is, in the circuit in the related art, the load current IL becomes zero at a time t22 at which the gate voltage VG has not yet reached a low level. Accordingly, a switching loss is generated between the times t21 and t22.

As understood from the comparison between Figs. 6 and 7, the total current Itot of the embodiment may be larger than the load current I of the circuit in the related art when the cutoff operation is performed. However, since the cutoff operation time (=t23-t21) is much shorter than the conduction operation time (=t13-t11), a switching loss per cutoff operation does not significantly increase.

The description of a switching loss with reference to Figs. 4 to 7 is applicable to all of the four switching elements 31 to 34. Further, in the first embodiment, an effect capable of significantly reducing a switching loss during the conduction operation far outweighs the adverse effect of increasing a switching loss during the cutoff operation. Accordingly, it is possible to reduce a switching loss per unit time, which is generated when the conduction operation and the cutoff operation are repeated, by a simple circuit configuration in which the efficiency improvement coil 6 is added to the circuit in the related art.

For the confirmation of the effect of the AC power supply device 1 according to the first embodiment, comparative tests, in which a high-frequency AC voltage was output to the external load 9, were performed with the efficiency improvement coil 6 mounted or removed while conditions such as the external load 9 were controlled. As a result of the comparative tests, temperature rise values of the switching elements 31 to 34 which were obtained when the efficiency improvement coil 6 was mounted became half or smaller than half of temperature rise values that were obtained when the efficiency improvement coil 6 was removed. This means that it is possible to reduce the size and weight of the AC power supply device 1 by greatly simplifying the radiation fins through the embodiment of the invention.

In the above-mentioned AC power supply device 1A according to the first embodiment, each of the switching elements 31 to 34 includes the gate terminal G to which the gate voltage VG (gate control signal) is input, and is a semiconductor element that is in the conduction state at a high level (first level) of the gate voltage VG and is in the cutoff state at a low level (second level) of the gate voltage VG. The switching control unit 5 generates the gate voltage VG, of which a rate of change from the high level to the low level is higher than a rate of change from the low level to the high level, and applies the gate voltage VG to the gate terminal G. Accordingly, since the cutoff operation time is definitely shorter than the conduction operation time, an effect of reducing a switching loss becomes remarkable.

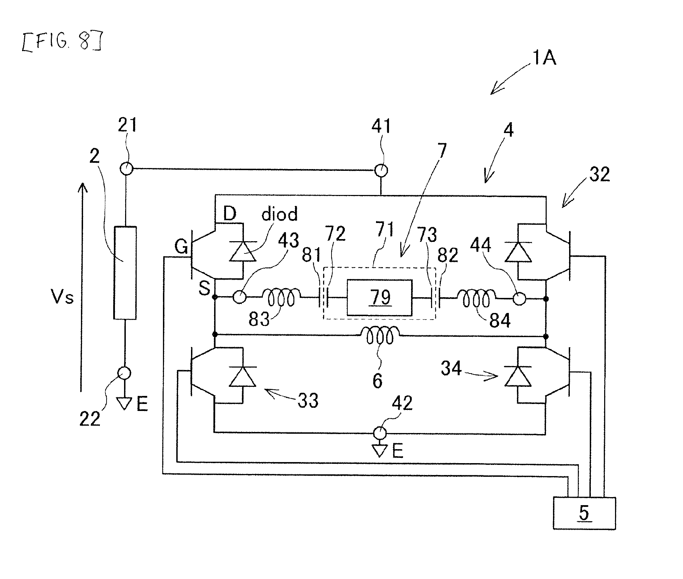

Next, an AC power supply device 1A according to a second embodiment will be described. In the second embodiment, the configuration of the AC power supply device 1A is not different from that of the first embodiment but an electrostatic-coupling non-contact power feed device 7 is specified as the external load. Fig. 8 is a diagram showing the configuration of the AC power supply device 1A according to the second embodiment and the non-contact power feed device 7 as the external load. The non-contact power feed device 7 uses the AC power supply device 1A, which is fixed to a fixed portion, as a power supply and supplies high-frequency AC power to an electric load 79, which is mounted on a movable portion 71, in a non-contact manner.

As shown in Fig. 8, a first power supply electrode 81 is connected to a first output terminal 43 of the AC power supply device 1A, which is fixed to the fixed portion, through a resonance coil 83. Likewise, a second power supply electrode 82 is also connected to a second output terminal 43 through a resonance coil 84. Meanwhile, the movable portion 71 is provided with a first power receiving electrode 72 that faces the first power supply electrode 81 so as to be spaced apart from the first power supply electrode 81, and a second power receiving electrode 73 that faces the second power supply electrode 82 so as to be spaced apart from the second power supply electrode 82. The first and second power receiving electrodes 72 and 73 are connected to the electric load 79. The electric load 79 includes a power receiving transformer circuit that transforms high-frequency AC power received by the first and second power receiving electrodes 72 and 73.

In the above-mentioned configuration, a coupling capacitor is formed between the first power supply electrode 81 and the first power receiving electrode 72 that face each other so as to be spaced apart from each other and a coupling capacitor is formed between the second power supply electrode 82 and the second power receiving electrode 73 that face each other so as to be spaced apart from each other. Further, a circuit is configured so that resonant conditions are satisfied by series circuits formed of the coupling capacitors and the resonance coils 83 and 84. That is, inductance values of the resonance coils 83 and 84 are appropriately set and the frequency of the switching operation of the inverter unit 4 is controlled, so that the frequency of a high-frequency wave is appropriately controlled. Accordingly, it is possible to efficiently supply power in a non-contact manner by the non-contact power feed device 7.

Since the efficiency improvement coil 6 is provided, an effect capable of reducing a switching loss and an effect capable of reducing the size and weight of the AC power supply device 1A by simplifying radiation fins are also generated likewise in the second embodiment.

In the above-mentioned AC power supply device 1A according to the second embodiment, the external load 9 includes the power supply electrodes 81 and 82 (power supply elements) used to supply power in a non-contact manner and the inverter unit 4 outputs a high-frequency AC voltage.

According to the second embodiment, since the number of times of the switching operation of the inverter unit 4 is significantly large compared to that of an inverter device for a commercial frequency, an effect of reducing a switching loss becomes remarkable. Further, if radiation fins are not simplified even though the amount of heat generated from the switching elements 31 to 34 decreases, the temperature rise value of the device 1A decreases. Accordingly, it is also possible to increase non-contact power supply capacity by increasing the amount of current by that much.

Furthermore, the power supply elements are formed of the power supply electrodes 81 and 82 that are used to supply power in an electrostatic-coupling non-contact manner. Here, the amount of heat generated from the switching elements 31 to 34 decreases and the frequency of the switching operation can be increased as much as the decrease of the temperature rise value. For this reason, even though the frequency of a high-frequency wave is increased, a thermal adverse effect is not generated. Accordingly, since the impedance of the coupling capacitor is reduced, it is possible to ensure the same non-contact power supply capacity even though the power supply electrodes 81 and 82 and the power receiving electrodes 72 and 73 are reduced in size.

Meanwhile, the configuration for a single-phase output has been exemplified in the first and second embodiments, but the invention is not limited thereto and can also be applied to an AC power supply device for a three-phase output. In this case, an inverter unit is formed of at least six switching elements and a total of three efficiency improvement coils are provided between the respective output terminals for three phases. Further, the invention is suitable for a high-frequency AC power supply device of which the frequency of a switching operation is high, but is not limited thereto. Furthermore, the type of the external load 9 is also not limited to the non-contact power feed device 7. The invention may include other various applications or modifications.

Reference Signs List

1, 1A: AC POWER SUPPLY DEVICE
2: DC POWER SUPPLY UNIT, 21: POSITIVE TERMINAL, 22: NEGATIVE TERMINAL
31 to 34: FIRST TO FOURTH SWITCHING ELEMENTS
4: INVERTER UNIT, 41: INPUT TERMINAL, 42: GROUND TERMINAL, 43: FIRST OUTPUT TERMINAL, 44: SECOND OUTPUT TERMINAL
5: SWITCHING CONTROL UNIT, 51: CONTROL POWER SUPPLY, 52: CONTROL SWITCH
53: CHARGING/DISCHARGING RESISTOR, 54: DISCHARGING RESISTOR, 55: DIODE
6: EFFICIENCY IMPROVEMENT COIL
7: ELECTROSTATIC-COUPLING NON-CONTACT POWER FEED DEVICE (EXTERNAL LOAD), 71: MOVABLE PORTION
72, 73: FIRST AND SECOND POWER RECEIVING ELECTRODES, 79: ELECTRIC LOAD
81, 82: FIRST AND SECOND POWER SUPPLY ELECTRODES, 83, 84: RESONANCE COIL
9: EXTERNAL LOAD
Vs: POWER SUPPLY VOLTAGE OF DC POWER SUPPLY UNIT
Vdc: DC VOLTAGE OF CONTROL POWER SUPPLY

**Claims**

**1.** An AC power supply device comprising:

a DC power supply unit that outputs a DC voltage;
an inverter unit that includes at least four bridge-connected switching elements, a pair of input terminals connected to the DC power supply unit, and an output terminal group connected to an external load, and that converts the DC voltage, which is input to the pair of input terminals from the DC power supply unit, into a single-phase or three-phase AC voltage, and outputs the single-phase or three-phase AC voltage to the external load from the output terminal group;
a switching control unit that controls the opening/closing of the switching elements; and
an efficiency improvement coil that is connected between terminals of the output terminal group and is connected in parallel to the external load.

2. The AC power supply device according to claim 1,
   wherein the switching element is a semiconductor element that includes a gate terminal to which a gate control signal is input, is in a conduction state at a first level of the gate control signal, and is in a cutoff state at a second level of the gate control signal, and
   the switching control unit generates the gate control signal, of which a rate of change from the first level to the second level is higher than a rate of change from the second level to the first level, and applies the gate control signal to the gate terminal.

3. The AC power supply device according to claim 1 or 2,
   wherein the external load includes power supply elements used to supply power in a non-contact manner, and the inverter unit outputs a high-frequency AC voltage.

4. The AC power supply device according to claim 3,
   wherein the power supply elements are power supply electrodes that are used to supply power in an electrostatic-coupling non-contact manner.

[FIG. 1]

[FIG. 2]

[FIG. 3]

[FIG. 4]

GATE VOLTAGE
VG

$\doteqdot Vdc$

TERMINAL VOLTAGE
V14

Vs

TOTAL CURRENT
Itot

t11    t13    t14

[FIG. 5]

GATE VOLTAGE
VG

$\doteqdot Vdc$

TERMINAL VOLTAGE
V14

Vs

LOAD CURRENT
IL

t11    t12    t13

[FIG. 6]

GATE VOLTAGE
VG

$=Vdc$

TERMINAL VOLTAGE
V14

Vs

TOTAL CURRENT
Itot

t21   t23

[FIG. 7]

GATE VOLTAGE
VG

$=Vdc$

TERMINAL VOLTAGE
V14

Vs

LOAD CURRENT
IL

t21   t22   t23

EP 2 961 056 A1

[FIG. 8]

14

## INTERNATIONAL SEARCH REPORT

| | International application No. |
| --- | --- |
| | PCT/JP2013/054591 |

A.   CLASSIFICATION OF SUBJECT MATTER
*H02M7/48*(2007.01)i

According to International Patent Classification (IPC) or to both national classification and IPC

B.   FIELDS SEARCHED

Minimum documentation searched (classification system followed by classification symbols)
H02M7/48

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2004-80846 A  (Kyosan Electric Mfg. Co.,<br>Ltd.),<br>11 March 2004 (11.03.2004),<br>paragraphs [0035], [0047]<br>& US 2004/0032212 A1    & DE 10257147 A1<br>& DE 10262286 B | 1<br>3-4<br>2 |
| Y | WO 2012/098867 A1  (Panasonic Corp.),<br>26 July 2012 (26.07.2012),<br>entire text; all drawings<br>(Family: none) | 3-4 |
| Y | JP 9-312942 A  (Hitachi, Ltd.),<br>02 December 1997 (02.12.1997),<br>entire text; all drawings<br>(Family: none) | 4 |

☐  Further documents are listed in the continuation of Box C.        ☐  See patent family annex.

| | |
| --- | --- |
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    17 May, 2013 (17.05.13) | Date of mailing of the international search report<br>    28 May, 2013 (28.05.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**EP 2 961 056 A1**

**Patent documents cited in the description**

- JP 2004064907 A